# EUROPEAN PATENT APPLICATION

(11) **EP 4 725 563 A1**
(43) Date of publication of application: **15.04.2026**
(21) Application number: 25777168.3
(22) Date of filing: 26.02.2025
(51) Int. Cl.: A62D 1/00, A62C 3/16, H01M 10/42, A62C 31/24, A62C 35/10, H01M 10/48

(54) **FIRE-EXTINGUISHING COMPOSITION AND BATTERY PACK COMPRISING SAME**

(30) Priority: 29.03.2024 KR 20240042899
(71) Applicant: LG Energy Solution, Ltd., Seoul 07335 (KR)
(72) Inventor: LEE, Seong Kyu, Daejeon 34122 (KR); JUNG, Kyung Hwan, Daejeon 34122 (KR); YOO, Kwang Ho, Daejeon 34122 (KR); JUNG, Byoung Hyo, Daejeon 34122 (KR); KIM, Shul Kee, Daejeon 34122 (KR)
(74) Representative: Hoffmann Eitle
(86) International application number: PCT/KR2025/002703
(87) International publication number: WO 2025/206602

(57) **Abstract**

The present disclosure relates to a fire extinguishing composition and a battery pack including the same. The fire extinguishing composition includes an inorganic compound and a polycarboxylic acid compound in a predetermined content ratio and controls viscosity at room temperature to a predetermined range, thereby being capable of uniformly forming a fire extinguishing film at points where events occur when thermal events occur in battery packs, and thus has characteristics of high cooling effect and suffocating effect for fire extinguishing. In addition, the battery pack including the same can rapidly detect points where thermal events occur and directly spray the fire extinguishing composition concentratedly to the corresponding points, thereby not only facilitating prevention of thermal event propagation but also having an advantage of shortening the time required to resolve the event.

## Description

### [Technical Field]

The present disclosure relates to a fire extinguishing composition and a battery pack including the same.

This application claims the benefit of priority from Korean Patent Application No. 10-2024-0042899, filed on March 29, 2024, the entire contents disclosed therein are incorporated by reference into this disclosure.

### [Background]

Secondary batteries have the characteristic of being capable of repeated charging and discharging and receiving much attention in various fields ranging from small mobile devices to electric vehicles, hybrid vehicles, or energy storage systems (ESS). In addition, applications using secondary batteries are becoming more diversified, and types of batteries are also being developed to provide appropriate output and capacity.

Secondary batteries applied to electric vehicles or energy storage systems are being applied as so-called medium and large-sized battery packs in which a plurality of battery cells are electrically connected due to the need for high output and large capacity.

Medium and large-sized battery packs have a configuration in which a plurality of battery modules are accommodated in a case and electrically connected, and are equipped with various safety and control devices to prevent ignition or explosion due to overcharge, over discharge, over current, heat generation, and chain side reactions during use. The control device continuously detects voltage, current, temperature, etc. of battery cells and controls the operation of the battery. However, even when using a control device, electrical failure can occur at any time due to physical impact or vibration applied from the outside or internal problems. It is a known fact that electrical failure of battery packs has a high probability of leading to fire and explosion.

Fire occurring in battery packs starts from abnormal temperature rise and internal gas generation of lithium secondary batteries disposed inside the battery module. When the temperature of the lithium secondary battery rises abnormally and the internal pressure of the lithium secondary battery rises above a certain level due to internal gas generation, venting occurs in the lithium secondary battery. As a result, high-temperature gas is discharged to the outside of the lithium secondary battery, and high-temperature sparks containing electrode active material and aluminum particles are discharged. When such high-temperature gas and sparks encounter oxygen, a fire occurrence may occur.

In a case where thermal events such as abnormal high temperature, gas venting, spark discharge, or fire occurrence occur in some battery modules among a plurality of battery modules included in the battery pack, thermal events may propagate to adjacent battery modules if appropriate measures are not taken.

Therefore, there is a need for the development of battery packs that can effectively prevent and solve the propagation of thermal events occurring within battery packs.

### [Summary]

### [Technical Problem]

Accordingly, an object of the present disclosure is to provide a technology that can effectively solve thermal events that occur while preventing propagation when thermal events occur in devices such as battery packs including a plurality of battery cells.

### [Technical Solution]

To solve the above-described problems,
the present disclosure provides
a fire extinguishing composition having a form in which 100 parts by weight of an inorganic compound represented by the following Chemical Formula 1 and 0.01 parts by weight to 5 parts by weight of a polycarboxylic acid compound are mixed in water, and
characterized by having a viscosity in the range of 2,000 mPa·s to 10,000 mPa·s at 25±3°C:

   [Chemical Formula 1] MₚO_{q}(OH)ᵣ
In Chemical Formula 1,
   wherein M is magnesium or aluminum,
   wherein p is an integer from 1 to 10, q is an integer from 0 to 20, provided that p≤q,
   wherein r is an integer from 1 to 5.

The fire extinguishing composition includes the inorganic compound represented by Chemical Formula 1 and the polycarboxylic acid compound in a predetermined content ratio to delay ignition or extinguish fire when thermal events occur in battery packs.

The inorganic compound represented by the Chemical Formula 1 may include one or more of boehmite, pseudoboehmite, diaspore, akdalaite, aluminum trihydroxide, and magnesium hydroxide.

The polycarboxylic acid compound may include one or more of malonic acid, citric acid, malic acid, oxalic acid, glutamic acid, aspartic acid, amino acid, fatty acid, methanetricarboxylic acid, ethanetricarboxylic acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid, benzene-1,2,4,5-tetracarboxylic acid, benzene-1,2,3,4,5-pentacarboxylic acid, and benzene-1,2,3,4,5,6-hexacarboxylic acid.

In addition, the fire extinguishing composition may further include one or more pH control agents among sodium bicarbonate, potassium bicarbonate, sodium carbonate, potassium carbonate, ammonium carbonate, ammonium dihydrogen phosphate, diammonium hydrogen phosphate, ammonium phosphate, ammonium chloride, ammonium molybdate, ammonium bromate, ammonium acetate, ammonium nitrate, and ammonium sulfate.

The pH control agent may be included in a content such that the pH of the fire extinguishing composition becomes 5 to 7.5.

In addition, the fire extinguishing composition may further include one or more viscosity modifiers among sodium alginate, pectin, gelatin, polymer polysaccharides, cellulose compounds, nonionic surfactants, bentonite, and borates.

The fire extinguishing composition according to the present disclosure may have a viscosity in the range of 2,000 mPa·s to 10,000 mPa·s at 25±3°C.

For example, the viscosity of the fire extinguishing composition may be in the range of 2,000 mPa·s or more and less than 5,000 mPa·s at 25±3°C, and may be in the range of 5,000 mPa·s or more and less than 9,000 mPa·s at 25±3°C.

The fire extinguishing composition may have a solid content in the range of 10% to 90% by weight.

Furthermore, the present disclosure provides:
a battery pack including a cell assembly including a plurality of battery cells arranged in a first direction and a pack case in which the cell assembly is accommodated, wherein the pack case includes a fire extinguishing part disposed on at least one inner surface among a top surface and side surfaces to spray the fire extinguishing composition according to the present disclosure described above when a thermal event occurs.

Here, the thermal event may include one or more of temperature rise of 100°C or higher, gas venting, flame discharge, and fire occurrence.

In addition, the cell assembly may include a sensing part including one or more detection sensors among a plurality of temperature detection sensors mounted on the cell assembly to detect surface temperature of the cell assembly, a gas detection sensor to detect concentrations of carbon monoxide, carbon dioxide, and ethane contained in internal air of the battery pack, and a flame detection sensor to detect whether flames occur and positions where flames occur.

Furthermore, the battery pack may further include a control unit electrically connected to the sensing part and the fire extinguishing part to obtain information detected by detection sensors of the sensing part during thermal events, determine whether thermal events occur and occurrence positions from the obtained information, and move the fire extinguishing part to the corresponding occurrence positions.

In addition, the fire extinguishing part may include a fire extinguishing agent storage part located outside the pack case and storing the fire extinguishing composition, a gas storage part located outside the pack case and storing inactive gas, a spraying device that receives and sprays the fire extinguishing composition and inactive gas stored respectively in the fire extinguishing agent storage part and the gas storage part and is capable of 180° rotation along a direction perpendicular to the first direction, and a guide part located on the inner surface of the pack case to move the spraying device along the first direction of the cell assembly.

Here, the spraying device may include a slurry supply pipe fluidly connected to the fire extinguishing agent storage part to supply the fire extinguishing composition stored in the fire extinguishing agent storage part, a gas supply pipe fluidly connected to the gas storage part to supply the inactive gas stored in the gas storage part, a spraying body fluidly connected to the slurry supply pipe and gas supply pipe to provide a space where the fire extinguishing composition and inactive gas supplied from them are mixed, and a nozzle fastened to the end of the spraying body to spray a mixture of the fire extinguishing composition and the inactive gas.

The gas supply pipe may further include a compression pump that applies pressure to the inactive gas, and the nozzle may have the flow rate controlled by pressure of the inactive gas supplied from the gas supply pipe.

Furthermore, the spraying body may be provided with a rotating device including a motor configured to generate driving force for rotation along a direction perpendicular to the first direction and a gear interposed between the motor and the spraying body; and a fixing device located between the rotating device and the guide part to move the spraying body by the guide part.

### [Advantageous Effects]

The fire extinguishing composition according to the present disclosure includes an inorganic compound and a polycarboxylic acid compound in a predetermined content ratio and controls viscosity at room temperature to a predetermined range, thereby being capable of uniformly forming a fire extinguishing film at points where events occur when thermal events occur in battery packs, and thus has characteristics of high cooling effect and suffocating effect for fire suppression.

In addition, the battery pack including the same can rapidly detect points where thermal events occur and spray the fire extinguishing composition to the corresponding points, thereby not only facilitating prevention of thermal event propagation but also having an advantage of shortening the time required to resolve the event.

### [Brief Description of the Drawings]

FIG. 1 is a structural diagram schematically illustrating a structure of a battery pack according to the present disclosure and an operating principle of a fire extinguishing part.
FIG. 2 is a perspective view illustrating a fire extinguishing part according to the present disclosure.
FIG. 3 is a cross-sectional view showing a section in which a spraying device is cut in the Y-axis and Z-axis directions for illustrating a structure of the spraying device of a fire extinguishing part according to the present disclosure.
FIG. 4 is a cross-sectional view showing a section in which a spraying device is cut in the X-axis and Y-axis directions for illustrating a structure of a rotating device of a fire extinguishing part according to the present disclosure.

### [Detailed Description]

The present disclosure may have various modifications and various aspects, and specific aspects will be described in detail in the following detailed description.

However, it should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, when a part of a layer, film, region, plate, or the like is disposed "on" another part, this includes not only a case in which one part is disposed "directly on" another part, but also a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, being disposed "on" in the present application may include cases of being disposed not only in an upper portion but also in a lower portion.

As used herein, "about," "approximately," and "substantially" are used to mean a range of values or degrees close thereto, taking into account inherent manufacturing and material tolerances, and are used to prevent infringers from unfairly exploiting disclosed content in which precise or absolute numerical values provided to aid in understanding the present disclosure.

In addition, in this specification, "D₅₀" can be defined as a particle diameter corresponding to 50% of the volume cumulative amount in a particle size distribution curve (graph curve of particle size distribution) of particles. The D₅₀ can be measured using, for example, a laser diffraction method. The laser diffraction method is generally capable of measuring particle diameters from the submicron region to several mm, and can obtain results with high reproducibility and high resolution.

In this specification, "solid content" refers to the mass percentage of substances other than solvents (i.e., solids) included in the fire extinguishing composition. The solid content can be obtained by first measuring the mass of the fire extinguishing composition, second measuring the mass after volatilizing the solvent included in the fire extinguishing composition, and then calculating the percentage of the second measured mass based on the first measured mass.

In this specification, "a viscosity" refers to be measured using a Brookfield type rotational viscometer at a temperature in the range of 25±3∘C and over a shear rate range of 0.01 s⁻¹ to 1,000 s⁻¹.

Hereinafter, the present disclosure will be described in more detail.

### Fire extinguishing composition

The present disclosure provides
a fire extinguishing composition having a form in which 100 parts by weight of an inorganic compound represented by the following Chemical Formula 1 and 0.01 parts by weight to 5 parts by weight of a polycarboxylic acid compound are mixed in water, and
characterized by having a viscosity in the range of 2,000 mPa·s to 10,000 mPa·s at 25±3∘C:

   [Chemical Formula 1] MₚO_{q}(OH)ᵣ
In Chemical Formula 1,
   wherein M is magnesium or aluminum,
   wherein p is an integer from 1 to 10, q is an integer from 0 to 20, provided that p≤q,
   wherein r is an integer from 1 to 5.

The fire extinguishing composition according to the present disclosure is applied to battery packs including lithium secondary batteries as battery cells, and may be for suppresing fires that have already occurred, or may be for limiting abnormal temperature rise before ignition. The fire extinguishing composition can be sprayed to points where thermal events are expected to occur or have occurred in battery packs to form a uniform fire extinguishing film on the surface of the corresponding points. The fire extinguishing composition has excellent effects of fire prevention and fire suppression because it can cool surrounding heat during the process of forming the fire extinguishing film while preventing contact with oxygen in the air.

Here, the thermal events may mean one or more of temperature rise of 100°C or higher, gas venting, flame discharge, and fire occurrence that occur inside devices including a plurality of lithium secondary battery cells.

To implement the above-described effects, the fire extinguishing composition includes an inorganic compound and a polycarboxylic acid compound.

The inorganic compound is a substance that forms the main component of the fire extinguishing composition, maintains a stable state even at temperatures of about 200°C to 350°C, and has the characteristic of thermally decomposing into water and inorganic oxides at temperatures higher than the above temperature to absorb surrounding heat. In this case, the thermal decomposition can lower the ambient temperature of the inorganic compound to suppress ignition, thereby reducing the possibility of fire occurrence. In addition, the inorganic compound has the advantage of not only reducing the generation of smoke and toxic gases during fire occurrence but also suppressing ignition even when flames or sparks splash.

Such inorganic compounds include compounds represented by the following Chemical Formula 1:

[Chemical Formula 1] MₚO_{q}(OH)ᵣ

In Chemical Formula 1,
wherein M is magnesium or aluminum,
wherein p is an integer from 1 to 10, q is an integer from 0 to 20, provided that p≤q,
wherein r is an integer from 1 to 5.

For example, the inorganic compound may include one or more of boehmite, pseudoboehmite, diaspore, akdalaite, aluminum trihydroxide, and magnesium hydroxide.

Clay used in conventional fire extinguishing compositions has excellent fire resistance by itself, but has the limitation that chemical reactions occur due to the components constituting the clay and the environment where the fire extinguishing composition is placed, causing problems of reduced fire resistance. However, the inorganic compounds have excellent chemical resistance and can achieve high fire resistance even when left in a composition state for a long time. In addition, the inorganic compound has a relatively higher amount of heat absorbed in the temperature range of 200°C to 300°C compared to metal oxides such as alumina, so it has the effect of delaying the internal temperature of the pack from reaching the ignition point when there is a rapid rise in internal temperature before ignition occurs inside the battery pack.

In addition, the inorganic compound may have a predetermined particle size. The inorganic compound may have a fine average particle diameter to uniformly form a fire extinguishing film on the surface of the sprayed point after spraying of the fire extinguishing composition even with a small content. For example, the inorganic compound may have an average particle diameter (D₅₀) in the range of 0.01 µm to 100 µm, and specifically may be in the range of 0.01 µm to 75 µm, 0.01 µm to 50 µm, 0.01 µm to 30 µm, 0.01 µm to 20 µm, 0.01 µm to 10 µm, 0.01 µm to 5 µm, 0.01 µm to 3 µm, 0.01 µm to 2 µm, 0.01 µm to 1 µm, 0.1 µm to 100 µm, 1 µm to 100 µm, 1 µm to 20 µm, 1 µm to 10 µm, 1 µm to 5 µm, 1 µm to 3 µm, 0.5 µm to 2 µm, 2 µm to 6 µm, 5 µm to 20 µm, 10 µm to 20 µm, 1 µm to 9 µm, or 1.5 µm to 6 µm.

The present disclosure can more effectively absorb surrounding heat when thermal events occur due to a large surface area by controlling the average particle diameter (D₅₀) of the inorganic compound to the above-described range, thereby preventing or delaying fire occurrence when there is a rapid temperature rise inside the battery pack. In addition, the present disclosure can prevent accidents due to dust generation during manufacturing of the fire extinguishing composition due to an average particle diameter smaller than the lower limit of the range, and can increase the dispersibility of the manufactured fire extinguishing composition. Furthermore, the present disclosure can prevent deterioration of the heat absorption performance of the inorganic compound in advance due to an average particle diameter larger than the upper limit of the range, while preventing reduction of state stability during long-term storage.

The polycarboxylic acid compound functions as a chelating agent for the inorganic compound included in the fire extinguishing composition to help form a uniform fire extinguishing film without aggregation of the inorganic compound on the surface of the sprayed point after spraying of the fire extinguishing composition.

For this purpose, the polycarboxylic acid compound may include compounds containing two or more carboxyl groups (-COOH), and specifically may include one or more of malonic acid, citric acid, malic acid, oxalic acid, glutamic acid, aspartic acid, amino acid, fatty acid, methanetricarboxylic acid, ethanetricarboxylic acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid, benzene-1,2,4,5-tetracarboxylic acid, benzene-1,2,3,4,5-pentacarboxylic acid, and benzene-1,2,3,4,5,6-hexacarboxylic acid (= mellitic acid).

For example, the polycarboxylic acid compound may include citric acid, malic acid and/or malonic acid.

In addition, the inorganic compound and polycarboxylic acid compound may be included in the fire extinguishing composition in a predetermined content ratio to enhance fire resistance. Specifically, when the fire extinguishing composition includes 100 parts by weight of the inorganic compound, it may include 0.01 parts by weight to 5 parts by weight of the polycarboxylic acid compound, and more specifically may include the polycarboxylic acid compound in amounts of 0.01 parts by weight to 4 parts by weight, 0.01 parts by weight to 3 parts by weight, 0.01 parts by weight to 2 parts by weight, 0.01 parts by weight to 1 part by weight, 0.05 parts by weight to 5 parts by weight, 0.1 parts by weight to 5 parts by weight, 0.5 parts by weight to 5 parts by weight, 1 part by weight to 5 parts by weight, 2 parts by weight to 5 parts by weight, 3 parts by weight to 5 parts by weight, 4 parts by weight to 5 parts by weight, 1 part by weight to 4 parts by weight, 1 part by weight to 3 parts by weight, 2 parts by weight to 4 parts by weight, or 1.5 parts by weight to 3 parts by weight.

In addition, the fire extinguishing composition may have a slurry form in which the inorganic compound and polycarboxylic acid compound are mixed in a solvent, wherein the solvent may be water (H₂O). The water can not only function as a solvent for mixing with various flame retardants but also absorb considerable surrounding heat while vaporizing into water vapor. In addition, the water increases in volume by about 1,600 times when vaporized, so it can rapidly lower the oxygen concentration at the fire occurrence point, which has an excellent suffocating effect. In addition, insulating oils such as silicone oil used as solvents in conventional fire extinguishing compositions are often flammable, and when they are non-flammable, they are expensive, so there is a problem of low economic efficiency. In contrast, water has the advantage of being not only non-flammable but also excellent in economic efficiency.

Meanwhile, the time when the fire extinguishing composition is sprayed is immediately before or after the rapid temperature rises and gas venting of the battery cell proceeds, and in this case, water included in the sprayed fire extinguishing composition may penetrate into the inside of the battery cell. Water that penetrates into the inside of the battery cell easily reacts with the electrolyte again to accelerate the generation of gases such as hydrogen fluoride (i.e., hydrofluoric acid) that are harmful to the human body, so it is highly likely to lead to fires that emit higher heat than general fires, and there is a limitation that it is difficult to respond to the generated fires. Accordingly, the fire extinguishing composition according to the present disclosure may be adjusted so that the inorganic compound and polycarboxylic acid compound are mixed with water, but the solid content satisfies a predetermined range. Specifically, the fire extinguishing composition may have a solid content in the range of 10% to 90% by weight, and specifically may have a solid content in the range of 10% to 90%, 15% to 90%, 20% to 90%, 25% to 90%, 30% to 90%, 35% to 90%, 40% to 90%, 45% to 90%, 50% to 90%, 55% to 90%, 60% to 90%, 65% to 90%, 70% to 90%, 75% to 90%, 10% to 50%, 10% to 40%, 25% to 50%, 30% to 80%, 40% to 70%, 51% to 90%, 51% to 80%, 51% to 70%, 55% to 75%, 45% to 60%, or 51% to 65% by weight.

The present disclosure can easily mix the inorganic compound and polycarboxylic acid compound while appropriately lowering the water content in the fire extinguishing composition by controlling the solid content of the fire extinguishing composition to the above range. In addition, when spraying a mixture of inorganic compound and polycarboxylic acid compound in powder form, it is difficult to form a fire extinguishing film on the surface of the point where the fire extinguishing composition is dispersed. However, the fire extinguishing composition of the present disclosure has a slurry form in which the inorganic compound and polycarboxylic acid compound are mixed with water, so after being coated on the surface of the point where the fire extinguishing composition is sprayed, water vaporizes to uniformly form a fire extinguishing film. The fire extinguishing film not only exhibits the effect of cooling the point where the fire extinguishing composition is sprayed and its surroundings without additional reaction with battery cells because a small amount of water vaporizes during the formation process, but also can effectively prevent oxygen in the internal air from being supplied to the point where thermal events occur after film formation.

In the case of slurries with high solid content, viscosity appears high, and in this case, not only is spraying of the fire extinguishing composition not easy, but also the sprayed fire extinguishing composition is sprayed in a lumped state and cannot form a coating layer, so it is difficult to form a fire extinguishing film even if water in the composition vaporizes. Accordingly, the fire extinguishing composition according to the present disclosure can satisfy a predetermined viscosity at room temperature for coating layer formation and conversion to a fire extinguishing film after spraying. Specifically, the fire extinguishing composition may have a viscosity in the range of 2,000 mPa·s to 10,000 mPa·s at 25±3°C. For example, the fire extinguishing composition may have a viscosity at 25±3°C in the range of 2,000 mPa·s to 8,000 mPa·s; 2,000 mPa·s to 6,000 mPa·s; 2,000 mPa·s to 4,000 mPa·s; 2,000 mPa·s to 5,000 mPa·s; 2,500 mPa·s to 5,000 mPa·s; 3,000 mPa·s to 4,500 mPa·s; 4,000 mPa·s to 5,000 mPa·s; 4,000 mPa·s to 6,000 mPa·s; 4,000 mPa·s to 8,000 mPa·s; 5,000 mPa·s to 9,000 mPa·s; 5,100 mPa·s to 9,000 mPa·s; 6,000 mPa·s to 8,000 mPa·s; 7,000 mPa·s to 9,900 mPa·s; 2,500 mPa·s to 3,500 mPa·s; 2,000 mPa·s or more and less than 5,000 mPa·s; or 5,000 mPa·s or more and less than 9,000 mPa·s.

The present disclosure can spray the fire extinguishing composition in a slurry state with high solid content without clogging of the spraying device when thermal events occur inside the battery pack by satisfying the room temperature viscosity of the fire extinguishing composition in the above-described range. In addition, the sprayed fire extinguishing composition can form a coating layer uniformly, and the time required for water included in the fire extinguishing composition to vaporize is required to be short, so fire suppression response time can be shortened.

The fire extinguishing composition may further include a separate viscosity modifier to control the viscosity at room temperature to the above-described range. The viscosity modifier may further include one or more viscosity modifiers among sodium alginate, pectin, gelatin, polymer polysaccharides, cellulose compounds, nonionic surfactants, bentonite, and borates.

The fire extinguishing composition may have a pH close to neutral by further including a pH control agent. The fire extinguishing composition includes a polycarboxylic acid compound together with an inorganic compound and exhibits a pH range of 3 to 4, which is weakly acidic by itself. However, when the fire extinguishing composition has a weakly acidic pH, when applied to battery packs, it not only causes corrosion of facilities where the fire extinguishing composition is stored and supplied, but also has the problem that the performance of the fire extinguishing composition is reduced due to the corrosion. Accordingly, the composition may further include a pH control agent to have a pH close to neutral, specifically a pH range of 5 to 7.5, pH 5 to 6.5, pH 5.5 to 7, pH 6 to 7.5, or pH 6.5 to 7.5.

The pH control agent may further include one or more pH control agents among sodium bicarbonate, potassium bicarbonate, sodium carbonate, potassium carbonate, ammonium carbonate, ammonium dihydrogen phosphate, diammonium hydrogen phosphate, ammonium phosphate, ammonium chloride, ammonium molybdate, ammonium bromate, ammonium acetate, ammonium nitrate, and ammonium sulfate.

For example, the pH control agent may include ammonium phosphate, and among them, may include monoammonium phosphate (NH₄H₂PO₄).

The pH control agent functions to neutralize the fire extinguishing composition while simultaneously absorbing and cooling surrounding heat generated during thermal decomposition, and generating non-flammable gases to achieve a suffocating effect. In particular, the monoammonium phosphate is thermally unstable and starts thermal decomposition at about 150°C, and can undergo stepwise endothermic processes through thermal decomposition at about 190±10°C, about 215±10°C, about 300±10°C, and about 250±10°C through the following reactions. Therefore, the monoammonium phosphate can not only neutralize the fire extinguishing composition but also has the advantage of being beneficial to the fire suppression process because it absorbs a large amount of heat during thermal decomposition:

[Reaction Equation 1] NH₄H₂PO₄ → H₃PO₄ + NH₃

[Reaction Equation 2] 2H₃PO₄ → H₄P₂O₇ + H₂O

[Reaction Equation 3] H₄P₂O₇ → 2HPO₃ + H₂O

[Reaction Equation 4] 2HPO₃ → P₂O₅ + H₂O.

The fire extinguishing composition according to the present disclosure can achieve cooling effects, suffocating effects, etc. by uniformly forming a fire extinguishing film in a short time at points where thermal events occur inside battery packs by having the above-described configuration. Therefore, the fire extinguishing composition can prevent fire from spreading and has excellent fire extinguishing effects. In addition, the fire extinguishing composition has the advantage of being not only environmentally friendly but also economical because it has a slurry form in which inorganic compounds and polycarboxylic acid compounds are dispersed in water.

### Battery pack

Furthermore, the present disclosure provides a battery pack including the above-described fire extinguishing composition.

Specifically, the battery pack includes a cell assembly including a plurality of battery cells arranged in a first direction and a pack case in which the cell assembly is accommodated, and the pack case includes a fire extinguishing part 20 disposed on at least one inner surface among a top surface and side surfaces to spray the fire extinguishing composition of the present disclosure described above when thermal events occur.

The battery pack includes a fire extinguishing part 20 that sprays the above-described fire extinguishing composition on the inner surface of the pack case in which the cell assembly is accommodated, and has excellent effects of extinguishing while preventing propagation when thermal events such as flame discharge and fire occurrence occur inside.

In addition, the battery pack does not spray the fire extinguishing composition to the entire interior when thermal events occur, but the fire extinguishing part 20 can rapidly move to the point where thermal events occur and directly spray the fire extinguishing composition concentratedly to the corresponding point. Through this, the battery pack can respond to thermal events more rapidly, so it has the advantage of excellent safety.

Here, the thermal events mean that the internal temperature of the battery pack rises rapidly and abnormally to a range of 100°C or higher, 150°C or higher, 200°C or higher, or 250°C or higher, or gas venting, flame discharge, fire occurrence, etc. occur inside the battery pack. Once the thermal events occur, one or more of the above-described phenomena occur simultaneously or in a chain reaction.

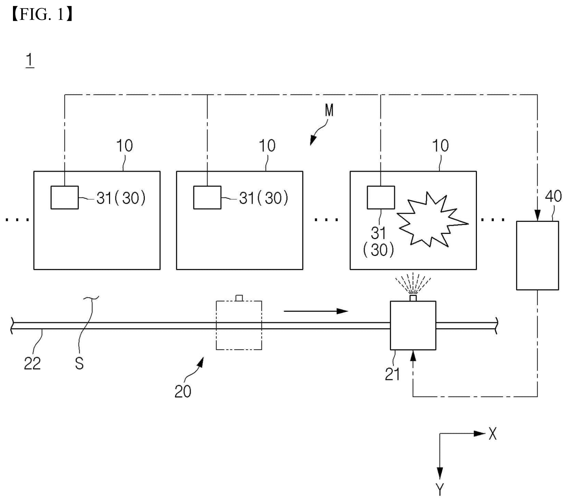

FIG. 1 is a structural diagram schematically illustrating a structure of a battery pack according to the present disclosure and an operating principle of a fire extinguishing part. Hereinafter, the battery pack 1 according to the present disclosure will be described with reference to FIG. 1.

The battery pack 1 includes a cell assembly 10 including a plurality of battery cells arranged in a first direction (direction parallel to the X-axis) and a pack case 50 in which the cell assembly is accommodated. At this time, the battery cells included in the cell assembly 10 may be pouch-type battery cells, prismatic battery cells, cylindrical battery cells, etc., and preferably may be pouch-type battery cells. In this case, the cell assembly 10 may have a form in which a plurality of pouch-type battery cells is arranged in the thickness direction of the battery cells.

In addition, the cell assembly 10 may mean a cell stack in which a plurality of battery cells is fixed by a frame structure, and in some cases, may mean a battery module including a plurality of battery cells.

In addition, the battery pack may have a predetermined separation distance between the cell assembly 10 and the pack case 50 so that the fire extinguishing part can move to the point where thermal events occur when thermal events occur. For example, the cell assembly 10 and the pack case 50 may have a separation distance in the range of 5cm to 20cm, 5cm to 15cm, 5cm to 10cm, 10cm to 20cm, or 15cm to 20cm between them.

In addition, the battery pack 1 may include means for moving the fire extinguishing part to the corresponding point when thermal events occur.

For example, to detect points where thermal events occur, a sensing part 30 that detects temperature changes, concentration changes of internal air components, whether flames occur, etc. that change when thermal events occur may be provided in the cell assembly 10.

Specifically, the cell assembly 10 may be equipped with one or more detection sensors 31 among a plurality of temperature detection sensors that detect surface temperature of the cell assembly 10, a gas detection sensor that detects concentration of venting gas contained in internal air of the battery pack 1, and a flame detection sensor that detects whether flames occur and positions where flames occur.

The temperature detection sensor is mounted on the surface of the cell assembly and can measure the surface temperature of the cell assembly in real time. At this time, the temperature detection sensors may be mounted in plurality to have a predetermined separation distance on the surface of the cell assembly along the first direction, or may be individually mounted on each of the plurality of battery cells constituting the cell assembly.

In addition, the gas detection sensor can measure components and concentrations of internal air that have changed due to gas venting of battery cells. Gas venting of battery cells means that the internal temperature of battery cells rises due to electrical, thermal, and physical external stress of battery cells, and accordingly, gas generated by vaporization or decomposition of electrolyte is discharged to the outside of battery cells. At this time, the discharged gas includes hydrocarbon gases such as methane and ethane, and carbon oxide gases such as carbon monoxide (CO) and carbon dioxide (CO₂). Therefore, the gas detection sensor can measure concentrations of hydrocarbon gases and carbon oxide gases, which are venting gases, among air components inside the battery pack.

In addition, the flame detection sensor is equipped with an infrared LED and can detect whether flames occur by measuring infrared wavelengths (110 nm to 760 nm) derived from flames when flame discharge and/or fire occurrence occurs.

The gas detection sensors may be mounted in plurality on the surface with the cell assembly or on the inner surface of the pack case 50 adjacent to the cell assembly 10 along the first direction with a predetermined separation distance.

In addition, the cell assembly 10 may include a control unit 40 that is electrically connected to the sensing part and receives measured or detected results, and determines whether thermal events have occurred from the received results.

For example, when the detection sensor 31 is a temperature detection sensor, the control unit 40 can obtain surface temperature information of the cell assembly 10 measured by a plurality of temperature detection sensors. Thereafter, it calculates temperature change per unit second based on the obtained temperature information, and if the calculated temperature change amount is +5°C or more (i.e., temperature rise of 5°C or more), it can determine that a rapid temperature rise of 100°C or more has occurred at the position of the temperature detection sensor that provided the corresponding temperature information.

When the detection sensor 31 is a gas detection sensor, the control unit 40 obtains information about air components and concentrations inside the cell assembly 10 measured by a plurality of gas detection sensors, and based on the obtained information, can determine that gas venting has occurred when concentration changes of hydrocarbon gases and carbon oxide gases, which are venting gases, are 50 ppm to 1,000 ppm per unit second.

When the detection sensor 31 is a flame detection sensor, the control unit 40 obtains infrared detection information measured by a plurality of flame detection sensors, confirms whether infrared rays are detected based on the obtained infrared detection information, and when it is confirmed that infrared rays are detected, can determine that flame discharge and/or fire occurrence has occurred.

When the control unit 40 determines that thermal events have occurred from information obtained from the sensing part 30, it can determine that thermal events have occurred at the position of the detection sensor 31 that transmitted the corresponding information among the plurality of detection sensors 31. When the occurrence position of thermal events is determined, the control unit 40 can move the electrically connected fire extinguishing part 20 to the corresponding position to spray the fire extinguishing composition.

The control unit 40 can also function as a BMS (battery management system) that controls charging and discharging of the battery pack 10. In addition, the control unit 40 may be disposed on one side of the cell assembly 10, and in some cases, may be disposed inside the pack case 50.

Here, the fire extinguishing part 20 may include means for moving to points where thermal events occur and means for spraying slurry-type fire extinguishing composition that satisfies predetermined viscosity at room temperature.

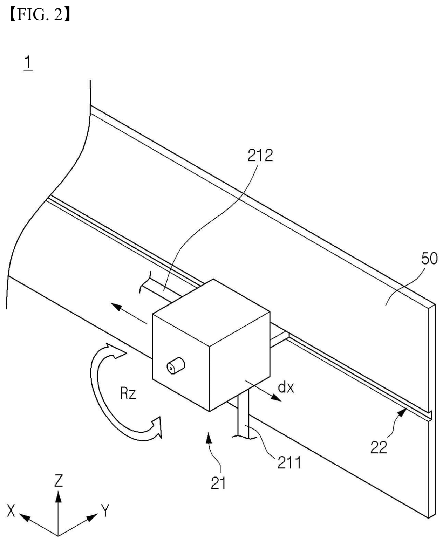

FIGS. 2 to 4 are diagrams showing structures of the fire extinguishing part and spraying devices and rotating devices included in the fire extinguishing part. Referring to FIGS. 2 to 4, the fire extinguishing part 20 includes a fire extinguishing agent storage part (not shown) located outside the pack case 50 and storing the fire extinguishing composition; a gas storage part (not shown) located outside the pack case 50 and storing inactive gas; a spraying device 21 that receives and sprays the fire extinguishing composition and inactive gas respectively stored in the fire extinguishing agent storage part and gas storage part and is capable of 180° rotation along a direction perpendicular to the first direction; and a guide part 22 located on the inner surface of the pack case 50 to move the spraying device 21 along the first direction of the cell assembly 10.

The fire extinguishing part 20 includes a spraying device 21 for spraying slurry-type fire extinguishing composition, and the spraying device 21 may have a structure that sprays the fire extinguishing composition in a form mixed with inactive gas.

During normal operation of the battery pack 1, the fire extinguishing composition is maintained in a filled state in ① a fire extinguishing agent storage part where the fire extinguishing composition is stored, ② a fire extinguishing part 20 mounted inside the pack case 50, and ③ a piping part connecting the fire extinguishing agent storage part and the fire extinguishing part 20. However, when sudden thermal events occur, the filled fire extinguishing composition is sprayed to the corresponding point where thermal events occur through the spraying device 21. At this time, since the dispersed fire extinguishing composition has been in a filled state in the fire extinguishing agent storage part and/or piping part for a long time, dispersibility of each component may deteriorate and separation of solute and solvent may occur. In this case, the sprayed fire extinguishing composition cannot form a uniform fire extinguishing film, so fire extinguishing performance is significantly reduced.

Accordingly, the fire extinguishing part 20 according to the present disclosure respectively includes a fire extinguishing agent storage part where the fire extinguishing composition is stored and a gas storage part where inactive gas is stored outside the pack case 50, and includes a spraying device 21 with a structure where the fire extinguishing composition and inactive gas supplied from each storage part are mixed, thereby preventing reduction of dispersibility of the fire extinguishing composition.

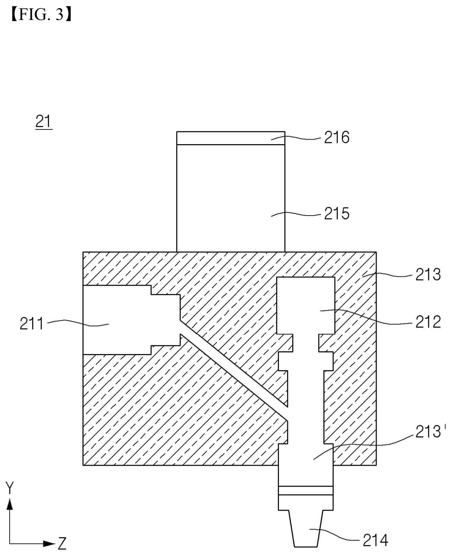

Specifically, as shown in FIG. 2 and FIG. 3, the spraying device 21 includes a slurry supply pipe 211 fluidly connected to the fire extinguishing agent storage part to supply the fire extinguishing composition stored in the fire extinguishing agent storage part, a gas supply pipe 212 fluidly connected to the gas storage part to supply the inactive gas stored in the gas storage part, a spraying body 213 fluidly connected to the slurry supply pipe 211 and gas supply pipe 212 to provide a space 213' where the fire extinguishing composition and inactive gas supplied from them are mixed, and a nozzle 214 fastened to the end of the spraying body 213 to spray a mixture of the fire extinguishing composition and inactive gas.

The spraying device 21 has a structure that mixes the fire extinguishing composition and inactive gas respectively supplied through the slurry supply pipe 211 and gas supply pipe 212 in the spraying body immediately before spraying the fire extinguishing composition, and then sprays through the nozzle 214. Through this, the fire extinguishing composition mixed with inactive gas in the spraying body can have improved dispersibility of the inorganic compound and polycarboxylic acid compound.

In addition, the gas supply pipe 212 may further include a compression pump (not shown) that applies pressure to the inactive gas to control the pressure (or flow rate) of the inactive gas supplied to the spraying body 213. The pressure (or flow rate) of the inactive gas supplied to the spraying body 213 can affect the spray pressure (or flow rate) of the fire extinguishing composition sprayed from the nozzle 214. When the viscosity is higher than water like the fire extinguishing composition according to the present disclosure, the spray angle may become narrower and the spray distance may become shorter during spraying compared to cases with low viscosity. When the spray angle of the fire extinguishing composition becomes narrower and the spray distance becomes shorter, position control where the fire extinguishing composition is dispersed may become more difficult, and a larger amount of fire extinguishing composition is used to form a uniform fire extinguishing film at points where thermal events occur. However, the present disclosure separately includes a compression pump in the gas supply pipe 212 to control the flow rate of the fire extinguishing composition sprayed from the nozzle through pressure control of the inactive gas mixed with the fire extinguishing composition, so position control where the fire extinguishing composition is sprayed is easy. Accordingly, the present disclosure can form a uniform coating layer at points where thermal events occur even when using a small amount of slurry-type fire extinguishing composition.

Furthermore, the spraying body 213 may include a rotating device 215 that rotates the spraying body 213 so that the fire extinguishing part 20 can concentratedly spray the fire extinguishing composition to points where thermal events occur.

The fire extinguishing part 20 includes a guide part 22 located on the inner surface of the pack case 50 to move the spraying device 21. However, since the guide part 22 moves only along the first direction of the cell assembly 10 (direction parallel to the X-axis), it is difficult for the spraying device 21 to move in directions perpendicular to the first direction (i.e., directions parallel to the Y-axis or Z-axis direction). Accordingly, the spraying body 213 of the spraying device 21 may include a rotating device 215 that rotates about a rotation axis substantially parallel to the first direction. Accordingly, the rotating device 215 can rotate along a direction perpendicular to the first direction of the cell assembly 10. Here, the direction perpendicular to the first direction of the cell assembly 10 may mean i) a second direction perpendicular to the first direction of the cell assembly 10 when the rotating device 215 is disposed on the inner surface of the pack case 50 (i.e., direction parallel to the Z-axis direction), or ii) a third direction perpendicular to the first direction of the cell assembly 10 when the rotating device 215 is disposed on the inner top surface of the pack case 50 (i.e., direction parallel to the Y-axis direction). The rotating device 215 can concentratedly spray the fire extinguishing composition to points where thermal events occur by directly rotating the spraying body 213 so that the nozzle 214 of the spraying device 21 where the fire extinguishing composition is dispersed faces the points where thermal events occur.

At this time, the rotating device 215 may be capable of 180° rotation in a direction perpendicular to the first direction. Therefore, the rotating device 215 can easily spray the fire extinguishing composition by rotating the spraying device 21 by 180° from one end to the other end in a direction perpendicular to the first direction with respect to the cell assembly 10.

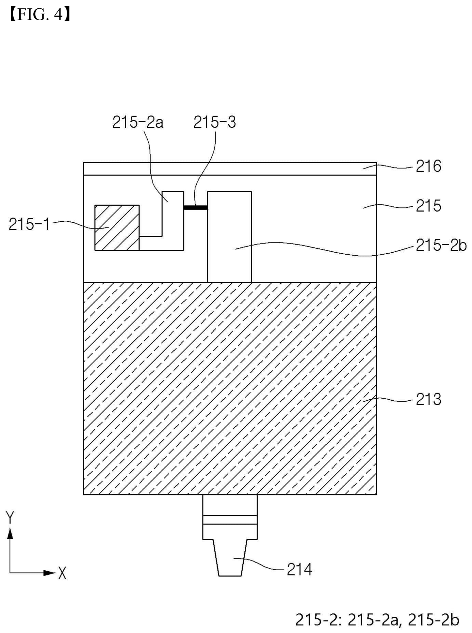

The rotating device 215 may include a motor 215-1 that provides rotational power to rotate the spraying device 21 and a gear 215-2 that induces rotation according to the rotational power of the motor. Specifically, as shown in FIG. 4, the spraying body 213 can be rotated by including a motor 215-1, a first gear 215-2a, a shaft 215-3, and a second gear 215-2b. The orientation of the spraying body 213 can be controlled by the motor 215-1, first gear 215-2a, shaft 215-3, and second gear 215-2b. In addition, the orientation of the spraying body 213 can be controlled by receiving position information determined from detection information measured by the sensing part 30 from the control unit 40. Accordingly, the spraying device 21 can concentratedly spray the fire extinguishing composition to points where thermal events occur (or adjacent points), and through this, can rapidly respond to thermal events.

The motor 215-1 may be configured to generate driving force for rotation of the nozzle 214. The motor 215-1 may be, for example, a precision control motor such as a servo motor and a step motor.

In addition, the first gear 215-2a may be interposed between the motor 215-1 and the nozzle 214. The second gear 215-2b may be interposed between the first gear 215-2a and the nozzle 214. For example, each of the first gear 215-2a and second gear 215-2b may be either a helical gear or a spur gear. The first gear 215-2a and second gear 215-2b may be connected by, for example, a shaft 215-3, but are not limited thereto. The shaft 215-3 may be omitted, and the first gear 215-2a and second gear 215-2b may directly contact. The driving force generated by the motor 215-1 may be transmitted to the nozzle 214 via the first gear 215-2a, shaft 215-3, and second gear 215-2b, and the nozzle 214 may be rotated by the driving force.

Furthermore, the fire extinguishing part 20 includes a guide part 22 to move along the extension direction of the space, i.e., the first direction, within the space formed between the cell assembly 10 and pack case 50 to move the spraying device 21 to points where thermal events occur (or adjacent points).

The guide part 22 may be directly formed on at least one inner surface among the top surface and side surfaces of the pack case 50. When the guide part 22 is directly formed on the inner surface of the pack case 50, additional space for forming the guide part 22 is not required, and the guide part 22 can be formed when manufacturing the pack case 50, so energy density and manufacturing processability of the battery pack 1 can be improved.

The guide part 22 may be provided as grooves, protrusions, or slits formed on the inner surface of the pack case 50. For example, the guide part 22 may be grooves, protrusions, or slits having a form extending long along the extension direction of the pack case 50 (direction parallel to the X-axis) on the inner surface of the pack case 50.

Meanwhile, the spraying body 213 of the spraying device 21 may be provided with a fixing device 216 for being fixed to the guide part 22 through the rotating device 215. The fixing device 216 may be provided on an outer portion of the rotating device 215 included in the spraying body 213, and may have a complementary structure corresponding to the guide part 22 so as to be fastened with the guide part 22 in the form of grooves, protrusions, or slits. The fixing device 216 may be configured so that the portion fastened with the guide part 22 moves along the extension direction without departing from the guide part 22.

Furthermore, the fire extinguishing part 20 may include a driving unit (not shown). The driving unit may be configured to provide power to the spraying device 21. The driving unit may be combined with the spraying device 21. The driving unit may include, for example, a motor and a roller driven by the motor. In this case, the roller can operate according to rotation of the motor while in contact with the guide part 22, thereby allowing the spraying device 21 to move along the extension direction of the guide part 22.

In addition, the fire extinguishing part 20 may be configured to be driven by power supplied from the battery pack 1 itself. That is, the battery pack 1 of the present disclosure may be configured to receive power necessary for operation of the driving unit and/or operation of the spraying device 21 (spraying operation of fire extinguishing composition) from some of the battery cells of the cell assembly included in the battery pack 1 itself, without receiving power supply through a separate power device. In this case, since there is no need to apply a separate battery for driving the fire extinguishing part 20, the structure of the battery pack 1 can be simplified.

Although not specifically shown in the drawings, the battery pack 1 of the present disclosure may be configured so that the fire extinguishing part 20 receives power necessary for operation from battery cells where thermal events have not occurred among the battery cells of the cell assembly 10 included in the battery pack 1. For example, the driving unit provided in the fire extinguishing part 20 may be individually electrically connected to a plurality of battery cells included in the cell assembly 10. Switches may be individually provided on power supply lines connecting the driving unit and each battery cell. Each of the switches may be connected to the control unit 40 of the present disclosure. The control unit 40 may be configured to control a switch installed on a power supply line connecting a battery cell located farthest from the battery cell where thermal events occurred and the driving unit to be in an on state, and control switches connecting other battery cells and the driving unit to be in an off state.

Furthermore, the fire extinguishing part 20 may include a piping part connected to the spraying device 21 and configured to supply fire extinguishing composition and/or inactive gas to the spraying device 21. The piping part may include a slurry supply pipe 211 that supplies the fire extinguishing composition stored in the fire extinguishing agent storage part to the spraying body 213 and a gas supply pipe 212 that supplies the inactive gas stored in the gas storage part to the spraying body 213. The piping part may extend along the first direction (direction parallel to the X-axis) and be drawn out to the outside of the battery pack 1. When the extension direction of the piping part extends along a direction parallel to the extension direction of the guide part 22 (direction parallel to the X-axis) like this, phenomena where the piping part causes interference with other components inside the battery pack 1 according to movement of the fire extinguishing part 20 can be minimized.

In addition, the piping part may be composed of materials capable of shape deformation to minimize constraints occurring when the fire extinguishing part 20 moves, and may be wound on a reel so that the length can be adjusted during normal operation of the battery pack 1.

The battery pack according to the present disclosure has the advantage of being able to rapidly detect points where thermal events occur and directly spray the fire extinguishing composition concentratedly to the corresponding points by having the above-described configuration, so prevention of thermal event propagation is easy, and time required for event resolution can be shortened.

Hereinafter, the present disclosure will be described in more detail by examples and experimental examples.

However, the following examples and experimental examples are merely illustrative of the present disclosure, and the content of the present disclosure is not limited to the following examples and experimental examples.

### Examples 1 to 7 and Comparative Examples 1 to 5. Preparation of fire extinguishing compositions

Aluminum hydroxide (Al(OH)₃), magnesium hydroxide (Mg(OH)₂), and alumina (Al₂O₃) were respectively prepared as inorganic compounds, and citric acid was prepared as a polycarboxylic acid compound. At this time, the inorganic compounds having an average particle diameter (D₅₀) of about 1 µm to 5 µm were used. In addition, monoammonium phosphate (NH₄H₂PO₄) was prepared as a pH control agent. Based on 100 parts by weight of the prepared inorganic compound, the polycarboxylic acid compound was weighed in the content shown in Table 1 below and mixed, and then water was added to the mixture. Then, while stirring the mixture to which water was added at 500±50 rpm for 10 minutes, a pH control agent was added so that the pH of the mixture became 7.0±0.3, and room temperature viscosity was controlled as shown in Table 1 using sodium alginate as a viscosity modifier. Thereafter, stirring was performed for 10 minutes to 20 minutes at the same stirring speed to prepare fire extinguishing compositions for battery packs. At this time, the solid content of each prepared fire extinguishing composition was measured based on weight. The results are shown in Table 1.

**[Table 1]**

| | Type of inorganic compound | Polycarboxylic acid compound content | Solid content | Room temperature viscosity [mPa·s] |
|---|---|---|---|---|
| Example 1 | Al(OH)₃ | 0.5 parts by weight | 60%~70% | About 3,500~4,000 |
| Example 2 | Al(OH)₃ | 2 parts by weight | 60%~70% | About 3,500~4,000 |
| Example 3 | Mg(OH)₂ | 2 parts by weight | 60%~70% | About 3,500~4,000 |
| Example 4 | Al(OH)₃:Mg(OH)₂ =1:1 (wt./wt.) | 2 parts by weight | 60%~70% | About 3,500~4,000 |
| Example 5 | Al(OH)₃ | 2 parts by weight | 1%~5% | About 3,500~4,000 |
| Example 6 | Al(OH)₃ | 2 parts by weight | 95%~98% | About 3,500~4,000 |
| Example 7 | Al(OH)₃ | 2 parts by weight | 60%~70% | About 6,500~7,000 |
| Comparative Example 1 | Al(OH)₃ | 0.005 parts by weight | 60%~70% | About 3,500~4,000 |
| Comparative Example 2 | Al(OH)₃ | 6 parts by weight | 60%~70% | About 3,500~4,000 |
| Comparative Example 3 | Al(OH)₃ | 2 parts by weight | 60%~70% | About 500~600 |
| Comparative Example 4 | Al(OH)₃ | 2 parts by weight | 60%~70% | About 11,000~11,500 |
| Comparative Example 5 | Al₂O₃ | 2 parts by weight | 60%~70% | About 3,500~4,000 |

### Experimental Examples.

To evaluate the fire extinguishing performance of fire extinguishing compositions prepared in Examples and Comparative Examples, the following experiments were performed.

Specifically, to simulate a battery pack in which thermal events occurred, a chamber corresponding to a case of a battery pack was prepared. At this time, the chamber was installed on the inner top surface in a state where a fire extinguishing agent tank storing the fire extinguishing composition and a nozzle spraying the fire extinguishing composition were connected through piping to spray the fire extinguishing composition.

In addition, 10 secondary battery cells of 1Ah grade were prepared, and each prepared secondary battery cell was charged so that the SOC became 100%. The prepared 10 secondary battery cells were assembled into a cartridge type cell assembly, and then mounted in the chamber so that each secondary battery cell was stacked. At this time, the cell assembly was provided so that aluminum plates having a predetermined thickness were fastened with bolts to the upper and lower parts of each secondary battery cell assuming a pressurization structure of secondary battery cells within the assembly, and each secondary battery cell was pressurized by the fastened aluminum plates. In addition, aluminum cooling plates were separately interposed between the upper and lower aluminum plates and secondary battery cells; and between the stacked secondary battery cells. A heating pad (silicone heater manufactured by Hotcow Co., Ltd., SBH2012) was installed between the lowermost secondary battery cell and the aluminum plate, and the heating pad was heated to heat the secondary battery cells at a temperature rise rate of 7°C/min to induce thermal runaway. When the secondary battery cells ignited due to the thermal runaway, the fire extinguishing composition (100g to 150g) was sprayed for 5 seconds through a nozzle provided on the inner top surface of the chamber.

① The time taken for the secondary battery cells to be extinguished immediately after spraying the fire extinguishing composition was measured. In addition, ② when the temperature inside the chamber was cooled to room temperature, the mounted cell assembly was taken out and the form of the fire extinguishing composition remaining in the area where the fire extinguishing composition was sprayed was visually evaluated.

At this time, visual evaluation was evaluated as ○, △, or X based on the criteria shown below:
- ○: When the remaining fire extinguishing composition formed a uniform fire extinguishing film
- △: When the remaining fire extinguishing composition formed a fire extinguishing film, but the formed fire extinguishing film was not uniform, or lumped fire extinguishing composition existed together in addition to the fire extinguishing film
- X: When the remaining fire extinguishing composition did not form a fire extinguishing film and had a lumped form and/or point dispersion form

The measured and evaluated results are shown in Table 2 below.

**[Table 2]**

| | Extinguishing time | Form of remaining fire extinguishing composition |
|---|---|---|
| Example 1 | 202 seconds | ○ |
| Example 2 | 195 seconds | ○ |
| Example 3 | 188 seconds | ○ |
| Example 4 | 163 seconds | ○ |
| Example 5 | 683 seconds | X |
| Example 6 | 577 seconds | X |
| Example 7 | 185 seconds | ○ |
| Comparative Example 1 | 435 seconds | X |
| Comparative Example 2 | 369 seconds | △ |
| Comparative Example 3 | 428 seconds | X |
| Comparative Example 4 | 451 seconds | X |
| Comparative Example 5 | 399 seconds | X |

As shown in Table 2 above, it can be seen that the fire extinguishing composition according to the present disclosure has excellent effects of extinguishing fires that occur within battery packs.

Specifically, the fire extinguishing compositions of Examples 1 to 4 and Example 7 were confirmed to uniformly form fire extinguishing films on the surface of points where ignition occurred after spraying, and accordingly, it was shown that remarkably short extinguishing times of less than 210 seconds were required.

From these results, it can be seen that the fire extinguishing composition according to the present disclosure includes an inorganic compound and a polycarboxylic acid compound in a predetermined content ratio and controls viscosity at room temperature to a predetermined range, thereby being capable of uniformly forming fire extinguishing films at points where events occur when thermal events occur in battery packs, so that cooling effects and suffocating effects for fire extinguishing are high.

While the present disclosure has been described with reference to preferred aspects of the present disclosure, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

### [Description of Reference Numerals]

| | | | |
|---|---|---|---|
| 1: | battery pack | | |
| 10: | cell assembly | | |
| 20: | fire extinguishing part | 21: | spraying device |
| 22: | guide part | | |
| 30: | sensing part | 31: | detection sensor |
| 40: | control unit | | |
| 50: | pack case | | |
| 211: | slurry supply pipe | 212: | gas supply pipe |
| 213: | spraying body | | |
| 213': | space where fire extinguishing composition and inactive gas are mixed | | |
| 214: | nozzle | | |
| 215: | rotating device | | |
| 215-1: | motor | 215-2: | gear |
| 215-2a: | first gear | 215-2b: | second gear |
| 215-3: | shaft | | |
| 216: | fixing device | | |
| S: | separation space between cell assembly and pack case | | |
| M: | inside of battery pack | | |
| dx: | X-axis direction | | |
| Rz: | Z-axis rotation | | |

## Claims

1. A fire extinguishing composition, comprising:
a form in which 100 parts by weight of an inorganic compound represented by the following Chemical Formula 1 and 0.01 parts by weight to 5 parts by weight of a polycarboxylic acid compound are mixed in water,
wherein the form comprises a viscosity in a range of 2,000 mPa·s to 10,000 mPa·s at 25±3°C,
[Chemical Formula 1] MₚO_{q}(OH)ᵣ
wherein in Chemical Formula 1:
M is magnesium or aluminum,
p is an integer ranging from 1 to 10,
q is an integer ranging from 0 to 20,
p≤q, and
r is an integer ranging from 1 to 5.

2. The fire extinguishing composition of claim 1, wherein the viscosity is in a range of 2,000 mPa·s or more and less than 5,000 mPa·s at 25±3°C.

3. The fire extinguishing composition of claim 1, wherein the viscosity is in a range of 5,000 mPa·s or more and less than 9,000 mPa·s at 25±3°C.

4. The fire extinguishing composition of claim 1, wherein the fire extinguishing composition has a solid content in a range of 10% to 90% by weight.

5. The fire extinguishing composition of claim 1, wherein the inorganic compound represented by the Chemical Formula 1 comprises one or more of boehmite, pseudoboehmite, diaspore, akdalaite, aluminum trihydroxide, or magnesium hydroxide.

6. The fire extinguishing composition of claim 1, wherein the polycarboxylic acid compound comprises one or more of malonic acid, citric acid, malic acid, oxalic acid, glutamic acid, aspartic acid, amino acid, fatty acid, methanetricarboxylic acid, ethanetricarboxylic acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid, benzene-1,2,4,5-tetracarboxylic acid, benzene-1,2,3,4,5-pentacarboxylic acid, or benzene-1,2,3,4,5,6-hexacarboxylic acid.

7. The fire extinguishing composition of claim 1, wherein the fire extinguishing composition further comprises one or more pH control agents selected from sodium bicarbonate, potassium bicarbonate, sodium carbonate, potassium carbonate, ammonium carbonate, ammonium dihydrogen phosphate, diammonium hydrogen phosphate, ammonium phosphate, ammonium chloride, ammonium molybdate, ammonium bromate, ammonium acetate, ammonium nitrate, or ammonium sulfate.

8. The fire extinguishing composition of claim 7, wherein the one or more pH control agents are included in a content such that a pH of the fire extinguishing composition ranges from 5 to 7.5.

9. The fire extinguishing composition of claim 1, wherein the fire extinguishing composition further comprises one or more viscosity modifiers selected from sodium alginate, pectin, gelatin, polymer polysaccharides, cellulose compounds, nonionic surfactants, bentonite, or borates.

10. A battery pack, comprising:
a cell assembly comprising a plurality of battery cells arranged in a first direction and a pack case in which the cell assembly is accommodated,
wherein the pack case comprises a fire extinguishing part disposed on at least one inner surface among a top surface and side surfaces, wherein the fire extinguishing part is configured to spray the fire extinguishing composition according to claim 1 when a thermal event occurs.

11. The battery pack of claim 10, wherein the thermal event comprises one or more of a temperature rise of 100°C or higher, a gas venting, a flame discharge, or a fire occurrence.

12. The battery pack of claim 10, wherein the cell assembly comprises a sensing part comprising one or more of a plurality of temperature detection sensors mounted on the cell assembly configured to detect a surface temperature of the cell assembly, a gas detection sensor configured to detect concentrations of carbon monoxide, carbon dioxide, and ethane contained in internal air of the battery pack, or a flame detection sensor configured to detect whether flames occur and positions where flames occur.

13. The battery pack of claim 12, wherein the battery pack further comprises a control unit electrically connected to the sensing part and the fire extinguishing part and wherein the control unit is configured to obtain information detected by detection sensors of the sensing part during thermal events, determine whether thermal events occur and occurrence positions from the obtained information, and move the fire extinguishing part to the corresponding occurrence positions.

14. The battery pack of claim 10, wherein the fire extinguishing part comprises,
a fire extinguishing agent storage part located outside the pack case, wherein the fire extinguishing agent storage part is configured to store the fire extinguishing composition,
a gas storage part located outside the pack case, wherein the gas storage part is configured to store an inactive gas,
a spraying device that is configured to receive and spray the fire extinguishing composition and the inactive gas stored respectively in the fire extinguishing agent storage part and the gas storage part and is capable of 180° rotation along a direction perpendicular to the first direction, and
a guide part located on the at least one inner surface of the pack case, wherein the guide part is configured to move the spraying device along the first direction of the cell assembly.

15. The battery pack of claim 14, wherein the spraying device comprises:
a slurry supply pipe fluidly connected to the fire extinguishing agent storage part, wherein the slurry supply pipe is configured to supply the fire extinguishing composition stored in the fire extinguishing agent storage part,
a gas supply pipe fluidly connected to the gas storage part, wherein the gas supply part is configured to supply the inactive gas stored in the gas storage part,
a spraying body fluidly connected to the slurry supply pipe and gas supply pipe, wherein the spraying body is configured to provide a space where the fire extinguishing composition and the inactive gas supplied from them are mixed, and
a nozzle fastened to the end of the spraying body, wherein the nozzle is configured to spray a mixture of the fire extinguishing composition and the inactive gas.

16. The battery pack of claim 15, wherein the gas supply pipe further comprises a compression pump, wherein the compression pump is configured to apply pressure to the inactive gas, and
the nozzle has a flow rate controlled by a pressure of the inactive gas supplied from the gas supply pipe.

17. The battery pack of claim 15, wherein the spraying body is provided with a rotating device comprising a motor configured to generate a driving force for rotation along the direction perpendicular to the first direction and a gear interposed between the motor and the spraying body; and
a fixing device located between the rotating device and the guide part to move the spraying body by the guide part.
